# EUROPÄISCHE PATENTANMELDUNG

(11) **EP 3 056 753 A2**
(43) Veröffentlichungstag der Anmeldung: **17.08.2016**
(21) Anmeldenummer: 16152979.7
(22) Anmeldetag: 27.01.2016
(51) Int. Cl.: F16D 1/08

(54) **POSITIONIEREN VON HÜLSENSEGMENTEN**

(30) Priorität: 13.02.2015 DE 102015102137
(71) Anmelder: manroland web systems GmbH, 86153 Augsburg (DE); Becker, Dorothea, 72401 Haigerloch (DE)
(72) Erfinder: Dr. Becker, Dorothea, 72401 Haigerloch (DE)

(57) **Zusammenfassung**

Ein Funktionselement mit einer Welle oder Achse, das in einem Wellen- oder Achsenabschnitt im Querschnitt senkrecht zur Drehachse der Welle oder Achse eine Außenkontur aufweist und mindestens einem Hülsensegment, das über einen ersten axialen Teilabschnitt der Länge im Querschnitt senkrecht zur Längsrichtung des Hülsensegmentes eine im Wesentlichen kreisförmige erste Innenkontur aufweist und über mindestens einem zweiten axialen Teilabschnitt der Länge im Querschnitt senkrecht zur Längsrichtung des Hülsensegmentes eine zweite Innenkontur aufweist, wobei das Hülsensegment derart auf der Welle oder Achse angeordnet ist, dass die Außenkontur der Welle oder Achse und die zweite Innenkontur des Hülsensegmentes einen Ringspalt bilden, soll eine besonders einfache, kostengünstige und sehr zuverlässige radiale und auch eine axiale Kraftübertragung bzw. Positionssicherung der Hülsensegmente, welche einzeln oder im Verbund auf eine Welle aufgefädelt werden, ermöglichen. Dazu sind die Außenkontur der Welle und die zweite Innenkontur des Hülsensegmentes zur Momentenübertragung nicht kreisförmig ausgeführt und ein Kopplungssystem zur radialen und/oder axialen Fixierung des Hülsensegmentes zumindest teilweise im Ringspalt angeordnet.

## Beschreibung

Die Erfindung bezieht sich auf ein Funktionselement mit einer Welle oder Achse, die in einem Wellen- oder Achsenabschnitt im Querschnitt senkrecht zur Drehachse der Welle oder Achse eine Außenkontur aufweist und mindestens einem Hülsensegment, das über einen ersten axialen Teilabschnitt der Länge im Querschnitt senkrecht zur Längsrichtung des Hülsensegmentes eine im Wesentlichen kreisförmige erste Innenkontur aufweist und über mindestens einem zweiten axialen Teilabschnitt der Länge im Querschnitt senkrecht zur Längsrichtung des Hülsensegmentes eine zweite Innenkontur aufweist, wobei das Hülsensegment derart auf der Welle oder Achse angeordnet ist, dass die Außenkontur der Welle oder Achse und die zweite Innenkontur des Hülsensegmentes einen Ringspalt bilden. Weiterhin bezieht sich die Erfindung auf eine Rollenrotationsmaschine mit einem oben genannten Funktionselement und ein Verfahren zur Bestückung einer Welle oder Achse mit einer Anzahl von Hülsensegmenten.

Derartige Funktionselemente werden insbesondere im Maschinenbau in einer Vielzahl von Anwendungsbereichen eingesetzt. Ein Beispiel für eines dieser Anwendungsbereiche ist der Einsatz von Rundbürsten in Rollenrotationsdruckmaschinen. Derartige Rundbürsten sind üblicherweise aus einem Bürstenrohr gefertigt, das als Welle oder Achse dient. Auf diesem Bürstenrohr wird der Bürstenbesatz auf- bzw. eingebracht. Eine derartige Bauweise der Rundbürsten ist allerdings nur bis zu einer bestimmten Länge möglich bzw. sinnvoll. Für größere Längen ist eine derartige einteilige Ausführung der Rundbürsten insbesondere dann nachteilig, wenn nur ein bestimmter Bereich des Bürstenbesatzes verstärkt beansprucht wird und so beim Verschleiß die gesamte Rundbürste ausgetauscht werden müsste, obwohl nur einzelne Bürstenbereiche abgenutzt sind.

Bei Druckmaschinen kommen derartige Rundbürsten für Breitsteck-, Anpress-oder Reinigungszwecke zum Einsatz. Dabei werden Rundbürsten verwendet, die eine Länge von bis zu 3 Metern aufweisen. Ein Austausch einer ganzen Rundbürste bei Verschleiß eines Teilbereiches des Bürstensatzes wäre in so einem Fall nicht nur extrem aufwendig zu realisieren sondern auch sehr kostenintensiv.

Aus diesem Grund umfassen derart lange Rundbürsten üblicherweise eine Anzahl von einzelnen, relativ kurzen Bürstensegmenten, die bei nicht angetriebenen Bürsten auf eine Achse bzw. bei rotativ angetriebenen Bürsten auf eine Welle aufgefädelt und nebeneinander angeordnet werden. Derartig kurze Bürstensegmente können im Vergleich zu einem einteiligen Bürstenrohr kostengünstig, zum Beispiel als Spritzgussteile, hergestellt werden und im Falle eines Verschleißes von einzelnen Bürstensegmenten individuell ausgetauscht werden.

Bei der Verwendung von einzelnen Bürstensegmenten, die auf die Welle oder Achse gefädelt werden, ist es allerdings erforderlich diese einzelnen Bürstensegmente sowohl gegen eine axiale Verschiebung aber auch radial auf der Achse oder Welle zu fixieren.

Zur axialen Sicherung sind aus dem Stand der Technik bzw. aus dem fachmännischen Wissen vielzählige Lösungen bekannt. So können die Bürstensegmente an eine Schulter der Welle oder Achse mittels einer Mutter gedrückt werden, es können beispielsweise aber auch Sicherungsringe verwendet werden.

Deutlich schwieriger ist dabei die radiale Fixierung der Bürstensegmente zueinander und der gesamten zusammengesetzten Bürste an der Welle oder Achse.

Aus dem Stand der Technik sind hierzu beispielsweise Systeme bekannt, in denen die Bürstensegmente an den axialen Kontaktflächen, die mit den benachbarten Bürstensegmenten in Kontakt stehen, ein Dreiecks- bzw. Zickzack-Profil aufweisen, so dass benachbarte Bürstensegmente ineinandergreifen und gegen eine relative Bewegung zueinander geschützt sind. Durch diese Ausbildung der Bürstensegmente können die einzelnen Bürstensegmente zwar zueinander fixiert werden, die stirnseitige Verzahnung ruft bei radialer Beanspruchung aber Axialkräfte hervor, die eine zusätzliche und aufwendige axiale Absicherung und Fixierung der Bürstensegmente erfordern. Darüber hinaus treten bei sehr schlanken und/oder langen Bürstenrollen (bei Waschsystemen kommen beispielsweise Bürsten mit einem Außendurchmesser von ca. 90 mm bei einer Länge von knapp 3.000 mm zum Einsatz) auch Durchbiegungseffekte auf, welche in Bereichen der Außenkontur der Bürstenrolle zu einer zusätzlichen Streckung und Abstandsvergrößerung führen.

Die aus dem Stand der Technik bekannten formschlüssigen Lösungen zur Momentenübertragung zwischen der Welle oder Achse und den Bürstensegmenten wie beispielsweise Passfedern, Keilwellen, Polygonwellen etc. sind entweder sehr teuer in der Herstellung oder aufgrund der teilweise sehr kleinen Anlageflächen nicht für eine wechselnde Belastung, welche sich beispielsweise schon allein aufgrund der wechselnden Belastung aus der Durchbiegung bei der Rotation ergibt, nicht für eine ausreichend lange Betriebsdauer geeignet. Durchgängige Keilwellenprofile oder Polygonprofile sind dabei zum einen insbesondere für die Welle oder Achse sehr teuer in der Herstellung, ferner besteht dabei der Nachteil, dass das Aufziehen der Bürstenelemente auf die Welle oder Achse oder das Demontieren von der Welle oder Achse insbesondere bei sehr schlanken oder lange Wellen oder Achsen aufgrund der Durchbiegung und den aufgrund der wechselnden Belastungen notwendigen sehr geringen Toleranzen in der Fertigung erschwert wird.

Formschlüssige Lösungen wie beispielsweise die Verwendung von Passstiften oder ähnlichen Elementen erfordern dagegen ein passgenaues Anbringen der Bohrungen, ferner können Längentoleranzen der aneinander zu reihenden Bürstensegmente nicht kompensiert werden. Ein manuelles Anbringen der Bohrungen scheidet aufgrund der Beeinträchtigung der Welle aus, zumal hierbei angemerkt wird, dass eine Bohrung durch eine Welle an sich eine zu vermeidende Schwächung darstellt.

Eine weitere Möglichkeit der radialen Fixierung der Bürstensegmente ist der Einsatz von Klemmschrauben. Allerdings liefern diese auch bei hohen Ansprüchen an die Qualität und die Dauerbelastbarkeit nur eine unbefriedigende Lösung, da sich aufgrund der wechselnden Belastungen wie Durchbiegung etc. die Klemmschrauben lockern oder in den Werkstoff der Welle eingraben können.

Die Aufgabe der Erfindung ist es daher, ein Funktionselement der oben genannten Art anzugeben, welches eine besonders einfache, kostengünstige und sehr zuverlässige radiale und auch eine axiale Kraftübertragung bzw. Positionssicherung von hülsenförmigen Segmenten, welche einzeln oder im Verbund auf eine Welle aufgefädelt werden, ermöglicht. Des Weiteren ist die Aufgabe ein Verfahren anzugeben, das eine besonders einfache Bestückung einer Welle oder Achse mit hülsenförmigen Segmenten liefert, die in radialer und axialer Richtung fixiert werden können.

Bezüglich des Funktionselements wird die Aufgabe erfindungsgemäß gelöst, indem die Außenkontur der Welle und die zweite Innenkontur des Hülsensegmentes zur Momentenübertragung nicht kreisförmig ausgeführt sind und ein Kopplungssystem zur radialen und/oder axialen Fixierung des Hülsensegmentes zumindest teilweise im Ringspalt angeordnet ist.

Vorteilhafte Ausgestaltungen des Funktionselements sind Gegenstand der Unteransprüche.

Die Erfindung geht von der Überlegung aus, dass für eine besonders einfache Fixierung der Hülsensegmente eine Kraftübertragung von der Welle oder Achse auf die Hülsensegmente wünschenswert ist, um die Hülsensegmente sowohl radial- als auch axial zu halten. Für eine derartige Kraftübertragung ist daher ein Kopplungssystem vorgesehen, das in einem Teilbereich des Hülsensegmentes zwischen der Welle oder Achse und dem Hülsensegment angeordnet ist. Um entsprechende Flächen bereitzustellen, an denen das Kopplungssystem anliegt und an denen es sich zur Kraftübertragung abstützen kann, ist die Außenkontur der Welle oder Achse und die Innenkontur des Hülsensegmentes im Bereich des Kopplungssystems zumindest teilweise nicht kreisrund ausgeführt.

Für eine möglichst kompakte Bauweise und eine Reduzierung der benötigten Bauelemente, insbesondere der Kopplungssysteme, umfasst auch ein zweites Hülsensegment, das neben dem ersten Hülsensegment angeordnet ist, in bevorzugter Ausgestaltung eine zweite nicht kreisrunde Innenkontur in einem zweiten axialen Teilabschnitt derart, dass auch das zweite Hülsensegment, wenn es auf der Welle angeordnet ist, zwischen der Außenkontur der Welle und der zweiten Innenkontur des Hülsensegmentes einen zweiten Spaltring bildet. Dabei ist das Kopplungssystem derart angeordnet, dass es sowohl in den ersten Ringspalt als auch in den zweiten Ringspalt eingreift. Dadurch wird nicht nur eine radiale und/oder axiale Fixierung beider Hülsensegmente gleichzeitig erreicht, es wird auch eine Verdrehung der beiden Hülsensegmente zueinander verhindert.

Für eine besonderes einfache und kostengünstige Herstellung der Welle oder Achse erstreckt sich der Abschnitt der Welle, der eine in einem Querschnitt senkrecht zur Drehachse der Welle oder Achse nicht kreisförmige Außenkontur aufweist, in vorteilhafter Ausgestaltung im Wesentlichen über die gesamte Länge der Welle oder Achse. Die Welle oder Achse kann dann zum Beispiel als Strangpressprofil ausgeführt sein.

Um eine besonders einfache Kopplung mehrerer benachbarter Hülsensegmente zu erreichen, ist mindestens einer der zweiten axialen Teilabschnitte eines Hülsensegmentes, der in einem Querschnitt senkrecht zur Längsrichtung des Hülsensegmentes eine nicht kreisförmig ausgeführte zweite Innenkontur aufweist, in besonders bevorzugter Ausführung in einem axialen Randbereich des Hülsensegmentes und insbesondere an einer Stirnseite des Hülsensegmentes angeordnet. Dabei können an beiden Stirnseiten des Hülsensegmentes je ein zweiter axialer Teilabschnitt vorgesehen sein oder auch nur an einer der beiden Stirnseiten ein zweiter axialer Teilabschnitt. Bei einer Anordnung von mehreren derartigen Hülsensegmenten nebeneinander, kann somit ein gemeinsamer Ringspalt erreicht werden, der sich in axialer Richtung über die beiden zweiten axialen Teilabschnitte zweier benachbarter Hülsensegmente erstreckt.

Eine besonders einfache Übertragung der (Dreh-)Momente zwischen der Welle oder Achse und den Hülsensegmenten einerseits und eine besonders einfache und kostengünstige Herstellung andererseits kann dann erreicht werden, wenn die nicht kreisförmige Außenkontur der Welle oder Achse im Wellenabschnitt und/oder die nicht kreisförmige zweite Innenkontur des Hülsensegmentes im zweiten Teilabschnitt des Hülsensegmentes in zumindest einem Teilbereich der Kontur eine besonderes einfache Abweichung von der Kreisform aufweist. Dazu ist die Kontur in zumindest diesem Teilbereich in vorteilhafter Ausgestaltung als ein Polygonzug ausgebildet. Dadurch sind beispielsweise in einfachster Ausführung gerade Teilbereiche der Kontur möglich. Weiterhin können auch Dreieckskonturen, insbesondere Zickzackkonturen möglich sein. Der Bereich der polygonen Kontur kann sich dabei auch über die gesamte Kontur erstrecken, wodurch Vielecke, insbesondere Dreiecks-, Quadrat-, Sechseckkonturen etc. sowohl auf der Welle als auch in dem Hülsensegment möglich sind.

Es hat sich gezeigt, dass eine Auffädelung des Kopplungssystems auf die Welle oder Achse, aufgrund der gewünschten und für die Momentenübertragung benötigten geringen Toleranzen zwischen der Außenkontur der Welle und der Innenkontur des Kopplungssystems nur schwer möglich ist. Daher ist in bevorzugter Ausgestaltung das Kopplungssystem mehrteilig ausgeführt. Durch die Aufteilung des Kopplungssystems in mehrere einzelne Kopplungselemente, wird eine Einbringung des Kopplungssystems in den Ringspalt ermöglicht, ohne das Kopplungssystem auf die Welle oder Achse auffädeln zu müssen. Dazu werden die einzelnen Kopplungselemente nacheinander oder gleichzeitig in den Ringspalt gelegt bzw. geschoben.

Für eine besonders einfache Herstellung der Teile des Kopplungssystems, also der Kopplungselemente, sind diese in vorteilhafter Ausführung symmetrisch zueinander ausgebildet. Dadurch können diese Kopplungselemente in einer Herstellungsform und in einer hohen Stückzahl produziert werden, was auch die Herstellungskosten erheblich drückt.

In alternativer oder zusätzlicher Ausgestaltung zur mehrteiligen Ausführung des Kopplungssystems kann dieses in bevorzugter Weise im Wesentlichen U-förmig ausgebildet sein. Dadurch ist es möglich das Kopplungssystem seitlich über das offene Ende auf die Welle oder Achse zu schieben und anschließend in axialer Richtung entlang der Welle in den Ringspalt zu platzieren. Auch hierdurch wird ein Auffädeln des Kopplungssystems auf die Welle oder Achse vermieden und eine besonders leichte Montage und spätere Demontage ermöglicht.

Bei der Verwendung eines solchen Funktionselementes kann es zu Drehmomentstößen auf die Hülsensegmente oder auch Vibrationen der Welle kommen, die die Innenkontur der Hülsensegmente oder das Kopplungssystem beschädigen können und somit die Lebensdauer dieser Bauteile beeinträchtigen. Um dies zu vermeiden ist in vorteilhafter Ausgestaltung das Kopplungssystem auf Basis eines elastischen Materials ausgeführt. So können Stöße oder Vibrationen aufgefangen und unterdrückt werden.

Für die Anwendung des Funktionselementes als eine Rundbürste, umfassen die Hülsensegmente in besonders bevorzugter Ausgestaltung über Bürstenelemente. Diese Bürstenelemente können dabei an der radialen Außenfläche angeordnet sein und erstrecken sich über die gesamte Länge und den gesamten Umfang der Hülsensegmente oder nur über einen Teilbereich dieser.

Ein derartiges Funktionselement wird in besonders vorteilhafter Ausführung in einer Rollenrotationsdruckmaschine eingesetzt.

Bezüglich des Verfahrens wird die oben genannte Aufgabe erfindungsgemäß gelöst, indem ein erstes Hülsensegmentes auf die Welle oder Achse derart geschoben wird, dass die im Querschnitt senkrecht zur Drehachse der Welle oder Achse definierte Außenkontur der Welle oder Achse und die im Querschnitt senkrecht zur Längsrichtung des Hülsensegmentes definierte Innenkontur des Hülsensegmentes einen ersten Ringspalt bilden und anschließend ein Kopplungssystem zumindest teilweise in den Ringspalt eingebracht wird.

Für eine einfache Auffädelung und Bestückung der Welle oder Achse mit weiteren Hülsensegmenten wird in vorteilhafter Weise ein zweites Hülsensegment auf die Welle oder Achse derart geschoben wird, dass die im Querschnitt senkrecht zur Drehachse der Welle oder Achse definierte Außenkontur der Welle oder Achse und die im Querschnitt senkrecht zur Längsrichtung des zweiten Hülsensegmentes definierte Innenkontur des zweiten Hülsensegmentes einen zweiten Ringspalt bilden, dass das zweite Hülsensegment benachbart zum ersten Hülsensegment angeordnet ist und dass das Kopplungssystem ebenfalls in den zweiten Ringspalt hineinragt.

Die mit der Erfindung erzielten Vorteile bestehen insbesondere darin, dass durch die Ausbildung einer nichtkreisförmigen Innenkontur in einem axialen Teilbereich des Hülsensegmentes und die nichtkreisförmige Außenkontur der Welle oder Achse in einem Wellen- oder Achsenabschnitt ein Zwischenraum zwischen Welle und Hülsensegment in Form eines Ringspaltes geschaffen wird, durch den eine Übertragung der (Dreh-)Momente zwischen Welle oder Achse und Hülsensegment durch ein Kopplungssystem ermöglicht wird. Durch den in axialer Richtung beschränkten axialen Teilbereich des Hülsensegmentes kommt es an dem Übergang von der kreisrunden Innenkontur zur nichtkreisrunden Innenkontur des Hülsensegmentes ebenfalls zu einer axialen Fixierung der Hülsensegmente durch das Kopplungssystem. Dadurch wird auf einfachste Art und Weise eine axiale und gleichzeitig radiale Fixierung der Hülsensegmente durch ein Kopplungssystem erreicht. Durch die Ausbildung der axialen Teilbereiche mit einer nicht kreisförmigen Innenkontur des Hülsensegmentes am Randbereich der Hülsensegmente wird zudem noch eine besonders einfache Bestückung der Welle oder Achse ermöglicht. Dadurch können einzelne Hülsensegmente besonders einfach und schnell und somit mit besonders kurzen Stillstandzeiten der Maschinenanlage ausgetauscht werden.

Ein Ausführungsbeispiel einer Erfindung wird anhand einer Zeichnung näher erläutert. Darin zeigen:
- Fig. 1: die Ansicht eines Hülsensegmentes auf einer Welle oder Achse in verschiedenen Perspektiven,
- Fig. 2: eine alternative Ausführung eines Kopplungssystems,
- Fig. 3: eine alternative Ausführung eines Hülsensegmentes.

Gleiche Teile sind in allen Figuren mit denselben Bezugszeichen versehen.

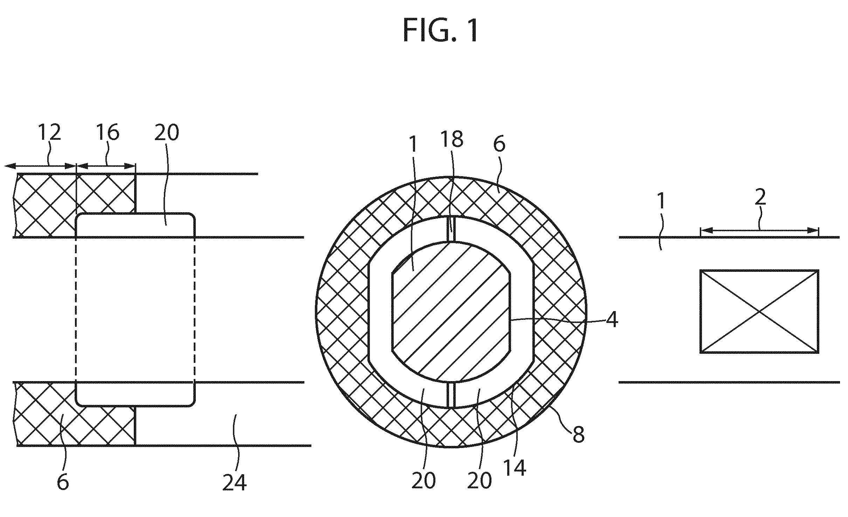

In der rechten Darstellung der Fig. 1 ist ein Abschnitt einer Welle oder Achse 1 dargestellt. In einem Wellen- oder Achsenabschnitt 2 umfasst die Welle oder Achse 1 eine flächige und ebene Ausnehmung, was dazu führt, dass die Außenkontur 4 der Welle oder Achse 1 in diesem Wellen- oder Achsenabschnitt in einer Querschnittsebene senkrecht zur axialen Richtung der Welle oder Achse 1 nicht kreisförmig ausgebildet ist.

In der mittleren Darstellung der Fig. 1 ist die Welle oder Achse 1 in einem Querschnitt senkrecht zur axialen Richtung der Welle oder Achse 1 im Bereich des Wellen oder Achsenabschnitts 2 gezeigt. In dieser Darstellung ist die nichtkreisförmige Außenkontur 4 der Welle oder Achse 1 deutlich zu erkennen. Die Außenkontur ist dazu an beiden Seiten der Welle gerade ausgeführt und somit die Kreisform an diesen Bereichen abgeflacht. Die abgeflachten Geraden der Ausnehmung im Wellen- oder Achsenabschnitt 2 sind im Ausführungsbeispiel nach der Fig. 1 parallel zueinander ausgeführt. Die Welle oder Achse 1 wird in radialer Richtung von einem Hülsensegment 6 umschlossen. Dieses Hülsensegment 6 umfasst eine zylindrische Außenkontur 8, die in der Querschnittszeichnung der mittleren Darstellung der Fig. 1 einer Kreisform entspricht. Die Innenkontur 10 des Hülsensegmentes 6 ist in einem ersten und in der mittleren Darstellung nicht ersichtlichen axialen Teilbereich 12 des Hülsensegmentes 6 ebenfalls kreisförmig ausgebildet. Darüber hinaus umfasst das Hülsensegment aber einen zweiten axialen Teilbereich 16, in dem die Innenkontur 14 des Hülsensegmentes 6 in einem Querschnittsebene senkrecht zur axialen Richtung des Hülsensegmentes 6 nicht kreisförmig ausgebildet ist. Dieser Querschnitt durch den zweiten axialen Teilbereich ist in der mittleren Darstellung der Fig. 1 dargestellt. Diese Innenkontur 14 ist an die Außenkontur 4 der Welle oder Achse 1 angepasst und ebenfalls an beiden Seiten durch eine Gerade abgeflacht, wobei die Geraden parallel zueinander angeordnet sind. Die Innenkontur 14 des Hülsensegmentes 6 ist dabei derart ausgebildet, dass zwischen der Innenkontur 14 des Hülsensegmentes 6 und der Außenkontur 4 der Welle oder Achse 2 ein Zwischenraum 18 gebildet wird. In der Ausführung des Hülsensegmentes 6 nach Fig. 1 ist dieser Zwischenraum 18 als Ringspalt 18 ausgebildet.

In diesen Ringspalt, ist ein Kopplungssystem eingebracht, welches auf der Innenseite ganz oder teilweise an die Außenkontur 4 der Welle oder Achse 1 angepasst ist und auf der Außenseite ganz oder teilweise an die Innenkontur 14 des Hülsensegmentes 6 angepasst ist. Das Kopplungssystem ist im Ausführungsbeispiel nach der Fig. 1 mehrteilig ausgeführt und umfasst zwei symmetrisch ausgeführte, in etwa halbkreisförmige Kopplungselemente. Durch die nicht kreisförmige Außenkontur 4 der Welle oder Achse 1 und Innenkontur 14 des Hülsensegmentes 6 kann über das Hülsensystem ein Drehmoment zwischen der Welle oder Achse 1 und dem Hülsensegment 6 über die Anlageflächen des Kopplungssystems 20 übertragen werden und dieses in radialer Richtung fixiert werden.

In der linken Darstellung der Fig. 1 ist ein Querschnitt in der axialen Richtung der Welle oder Achse 1 dargestellt. In dieser Darstellung sind der erste axiale Teilbereich 12 und der zweite axiale Teilbereich 16 des Hülsensegmentes zu erkennen. Die Innenkontur 10 des ersten axialen Teilbereiches 12 ist dabei exakt an den Durchmesser der Welle angepasst, während die Innenkontur 14 des zweiten axialen Teilbereiches 16, wie oben bereits erläutert, zur Bildung des Zwischenraumes 18 vergrößert ausgebildet ist. Durch diese vergrößerte Ausbildung der Innenkontur 14 gegenüber der Innenkontur 10 wird zugleich eine axiale Fixierung des Hülsensegmentes 6 über das Kopplungssystem 20 erreicht.

In axialer Richtung ist neben dem Hülsensegment 6 ein weiteres Hülsensegment 24 angeordnet, das in der Darstellung nur angedeutet ist. Auch dieses zweite Hülsensegment 24 umfasst einen ersten axialen Teilbereich 12 und einen zweiten axialen Teilbereich 16, die eine entsprechende Innenkontur 10, 14 aufweisen und dabei einen zweiten Ringspalt 26 bilden, wie sie bereits beim ersten Hülsensegment 6 bekannt sind. Die beiden zweiten axialen Teilbereiche 14 der beiden Hülsensegmente 6 sind dabei derart im axialen Randbereich der Hülsensegmente 6, 24 angeordnet, dass sie bei einer benachbarten Anordnung einen gemeinsamen großen Zwischenraum 22 bilden. Das Kopplungssystem 20 ist dabei in axialer Richtung derart ausgeführt, dass es in beide Zwischenräume bzw. Ringspalte 18, 26 eingreift und den gemeinsamen Zwischenraum bzw. Ringspalt 22 im Wesentlichen komplett ausfüllt.

Bei der Montage wird zunächst ein erstes Hülsensegment 6 auf die Welle oder Achse 1 aufgeschoben. Aufgrund der Passung zwischen der Innenkontur 14 des Hülsensegmentes 6 und der Außenkontur 4 der Welle oder Achse 1 im Wellen- oder Achsenabschnitt 2 ist ein positionsgenaues Fügen möglich. Vor dem Aufschieben des nächsten Hülsensegmentes 24 wird das zweiteilige Kopplungssystem 20 zwischen Welle oder Achse 1 und Hülsensegment 6 eingebracht. Dadurch ist das bereits aufgeschobene erste Hülsensegment 6 radial auf der Welle fixiert. Das nächste Hülsensegment 24 wird ebenfalls aufgeschoben, die radiale Position wird so gewählt, dass die Innenkontur 14 auf das bereits im ersten Hülsensegment 6 steckende Kopplungssystem 20 aufgesteckt werden kann. Beim Auffädeln mehrerer Hülsensegmente 6, 24 wird diese Vorgehensweise wiederholt. Es ist aber auch möglich, nicht an jedem Stoß der Hülsensegmente 6, 24 ein Kopplungssystem 20 zu verwenden, sondern erst nach einer Mehrzahl von auf die Welle oder Achse 1 aufgesteckten Hülsensegmenten 6, 24.

Es ist - insbesondere bei mehrteiliger Ausgestaltung des Kopplungselementes - auch möglich, neben Schlüsselweiten auch sonstige polygone Konturen wie beispielsweise Vierecke, insbesondere Quadrate, Sechsecke etc. sowohl auf der Welle oder Achse 1 als auch in dem Hülsensegment 6, 24 anzubringen. Insbesondere, wenn die Hülsensegmente 6, 24 beispielsweise im Spritzgussverfahren hergestellt werden, ist die Formgebung optimal an eine besonders gute Momentenübertragung anpassbar. Dabei ist es auch möglich, dass die Innenkonturen 10, 14 der Hülsensegmente 6,24 im ersten und zweiten axialen Teilbereich 12, 16 und auch die Außenkontur 4 der Welle oder Achse 1 im Wellen- oder Achsenabschnitt 2 in axialer Richtung veränderlich ausgeführt sind. In einem weiteren nicht dargestellten Ausführungsbeispiel kann die auf der Welle oder Achse 1 angebrachte Außenkontur 4 von der im Hülsensegment 6, 24 angebrachten Innenkontur 14 abweichen.

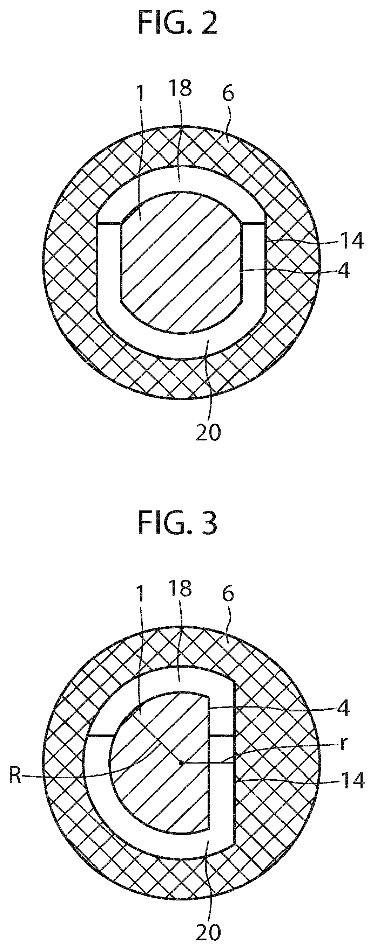

In Fig. 2 ist ein Ausführungsbeispiel der Erfindung im Querschnitt senkrecht zur axialen Richtung der Welle oder Achse 1 im Bereich des Wellen oder Achsenabschnitts 2 gezeigt. In diesem Ausführungsbeispiel ist das Kopplungssystem 20 nicht mehr mehrteilig, sondern nur noch einteilig ausgeführt, nämlich U-förmig, ausgeführt. Diese Form des Kopplungssystems wird unter anderem dadurch ermöglicht, dass das Hülsensegment 6 bereits durch die passgenaue Ausführung der Innenkontur 10 in einem ersten axialen Teilbereich des Hülsensegmentes 12 auf dem Außendurchmesser der Welle oder Achse 1 geführt bzw. positioniert ist, so dass das Kopplungssystem 20 nicht an der Innenkontur 14 des Hülsensegmentes allseitig anliegen muss. Somit kann gemäß Fig. 2 das Kopplungssystem 20 auch einteilig, beispielsweise wie in Fig. 2 dargestellt, als einseitig offene Klammer ausgeführt sein.

Um die Montage und insbesondere das Auf- bzw. Einschieben des Kopplungssystems 20 zu erleichtern, kann die polygonale Außenkontur 4 der Welle oder Achse 1 auch länger als die Breite des Kopplungssystems 20 ausgeführt werden. Dadurch kann bei aufgeschobenem Segment das ein- oder mehrteilige Kopplungssystem 20 auf die Welle oder Achse 1 aufgebracht und axial in den Ringspalt 18 geschoben werden.

In Fig. 3 ist wieder ein Ausführungsbeispiel der Erfindung im Querschnitt senkrecht zur axialen Richtung der Welle oder Achse 1 im Bereich des Wellen oder Achsenabschnitts 2 gezeigt. In diesem Ausführungsbeispiel ist die Außenkontur 4 der Welle oder Achse 1 und die Innenkontur 14 des Hülsensegmentes 6 in einem zweiten axialen Teilbereich 14 nur einseitig durch eine Gerade abgeflacht. Dabei ist allerdings der Abstand r zwischen dem Kreismittelpunkt M des Kreissegmentes der Außenkontur 4 der Welle oder Achse 1 geringer als der Radius des Kreissegmentes der Außenkontur 4 der Welle oder Achse 1. Dies führt dazu, dass das Hülsensegment 6 bereits durch die Form der Außenkontur 4 und Innenkontur 14 eine festgelegte radiale Ausrichtung hat. Dies ist insbesondere dann vorteilhaft, wenn die einzelnen Hülsensegmente 6 nicht nur radial und axial fixiert werden müssen sondern die Hülsensegmente 6 auch in einer bestimmten Ausrichtung angeordnet werden müssen.

### Bezugszeichenliste

- 1: Welle oder Achse
- 2: Wellen- oder Achsenabschnitt
- 4: Außenkontur der Welle oder Achse
- 6: Hülsensegment
- 8: Außenkontur des Hülsensegmentes
- 10: Innenkontur eines ersten axialen Teilbereiches des Hülsensegmentes
- 12: erster axialer Teilbereich des Hülsensegmentes
- 14: Innenkontur eines zweiten axialen Teilbereiches des Hülsensegmentes
- 16: zweiter axialer Teilbereich des Hülsensegmentes
- 18: Zwischenraum, Ringspalt
- 20: Kopplungssystem
- 22: gemeinsamer Zwischenraum, Ringspalt
- 24: zweites Hülsensegment
- 26: zweiter Ringspalt

## Patentansprüche

1. Funktionselement mit einer Welle oder Achse (1), die in einem Wellen- oder Achsenabschnitt (2) im Querschnitt senkrecht zur Drehachse der Welle oder Achse (1) eine Außenkontur (4) aufweist
und mindestens einem Hülsensegment (6), das über einen ersten axialen Teilabschnitt (12) der Länge im Querschnitt senkrecht zur Längsrichtung des Hülsensegmentes (6) eine im Wesentlichen kreisförmige erste Innenkontur (10) aufweist und über mindestens einem zweiten axialen Teilabschnitt (16) der Länge im Querschnitt senkrecht zur Längsrichtung des Hülsensegmentes (6) eine zweite Innenkontur (14) aufweist,
wobei das Hülsensegment (6) derart auf der Welle oder Achse (1) angeordnet ist, dass die Außenkontur (4) der Welle oder Achse (1) und die zweite Innenkontur (14) des Hülsensegmentes (6) einen Ringspalt (18) bilden,
**dadurch gekennzeichnet, dass** die Außenkontur (4) der Welle oder Achse (1) und die zweite Innenkontur (14) des Hülsensegmentes (6) zur Momentenübertragung nicht kreisförmig ausgeführt sind und ein Kopplungssystem (20) zur radialen und/oder axialen Fixierung des Hülsensegmentes (6) zumindest teilweise im Ringspalt (18) angeordnet ist.

2. Funktionselement nach Anspruch 1, **dadurch gekennzeichnet, dass** ein zweites Hülsensegment (24), das ebenfalls über einen ersten axialen Teilabschnitt (12) der Länge im Querschnitt senkrecht zur Längsrichtung des zweiten Hülsensegmentes (24) eine im Wesentlichen kreisförmige erste Innenkontur (10) aufweist und über mindestens einen zweiten axialen Teilabschnitt (16) der Länge im Querschnitt senkrecht zur Längsrichtung des zweiten Hülsensegmentes (24) eine zweite Innenkontur (14) aufweist, benachbart zum Hülsensegment (6) derart angeordnet ist, dass die Außenkontur (4) der Welle oder Achse (1) oder eine im Querschnitt senkrecht zur Drehachse der Welle oder Achse (1) zweite Außenkontur der Welle oder Achse (1) eines zweiten Wellen- oder Achsenabschnitts und die zweite Innenkontur (14) des zweiten Hülsensegmentes (24) einen zweiten Ringspalt (26) bilden und die Außenkontur (4) der Welle oder Achse (1) bzw. die zweite Außenkontur der Welle oder Achse (1) und die zweite Innenkontur (14) des zweiten Hülsensegmentes (24) zur Momentenübertragung nicht kreisförmig ausgeführt sind und das Kopplungssystem (20) zur radialen und/oder axialen Fixierung des zweiten Hülsensegmentes (24) zumindest teilweise im zweiten Ringspalt (26) angeordnet ist.

3. Funktionselement nach Anspruch 1 oder 2, **dadurch gekennzeichnet, dass** sich der Abschnitt (2) der Welle oder Achse (1), dessen Querschnitt senkrecht zur Drehachse der Welle oder Achse eine nicht kreisförmig ausgeführte Außenkontur (4) aufweist im Wesentlichen über die gesamte Länge der Welle oder Achse (1) erstreckt.

4. Funktionselement nach einem der Ansprüche 1 bis 3, **dadurch gekennzeichnet, dass** mindestens ein zweiter axialer Teilabschnitt (16) des Hülsensegmentes (6, 24), deren Querschnitt senkrecht zur Längsrichtung des Hülsensegmentes (6, 24) eine nicht kreisförmig ausgeführte zweite Innenkontur (14) aufweist in einem axialen Randbereich des Hülsensegmentes (6, 24) angeordnet ist.

5. Funktionselement nach einem der Ansprüche 1 bis 4, **dadurch gekennzeichnet, dass** die nicht kreisförmige Außenkontur (4) der Welle oder Achse (1) im Wellen- oder Achsenabschnitt (2) und/oder die nicht kreisförmige zweite Innenkontur (14) des Hülsensegmentes (6, 24) im zweiten Teilabschnitt (16)des Hülsensegmentes (6, 24) in zumindest einem Teilbereich der Kontur (4, 14) als ein Polygonzug ausgebildet ist.

6. Funktionselement nach einem der Ansprüche 1 bis 5, **dadurch gekennzeichnet, dass** das Kopplungssystem (20) mehrteilig ausgeführt ist.

7. Funktionselement nach Anspruch 6, **dadurch gekennzeichnet, dass** die Teile des Kopplungssystem (20) symmetrisch zueinander ausgeführt sind.

8. Funktionselement nach einem der Ansprüche 1 bis 7, **dadurch gekennzeichnet, dass** das Kopplungssystem (20) im Wesentlichen U-förmig ausgeführt ist.

9. Funktionselement nach einem der Ansprüche 1 bis 8, **dadurch gekennzeichnet, dass** das Kopplungssystem (20) auf Basis eines elastischen Materials ausgeführt ist.

10. Funktionselement nach einem, der Ansprüche 1 bis 9, **dadurch gekennzeichnet, dass** zumindest ein Teil der Hülsensegmente (6, 24) Bürstenelemente umfassen.

11. Rollenrotationsdruckmaschine mit einem Funktionselement nach einem der Ansprüche 1 bis 7.

12. Verfahren zur Bestückung einer Welle oder Achse (1) mit einer Anzahl von Hülsensegmenten (6, 24), wobei ein erstes Hülsensegment (6) auf die Welle oder Achse (1) derart geschoben wird, dass die im Querschnitt senkrecht zur Drehachse der Welle oder Achse (1) definierte Außenkontur (4) der Welle oder Achse (1) und die im Querschnitt senkrecht zur Längsrichtung des Hülsensegmentes (6) definierte Innenkontur (14) des Hülsensegmentes (6) einen ersten Ringspalt (18) bilden und anschließend ein Kopplungssystem (20) zumindest teilweise in den Ringspalt (18) eingebracht wird.

13. Verfahren zur Bestückung einer Welle oder Achse (1) mit einer Anzahl von Hülsensegmenten (6, 24) nach Anspruch 12, **dadurch kennzeichnet, dass** ein zweites Hülsensegment (24) auf die Welle oder Achse (1) derart geschoben wird,
dass die im Querschnitt senkrecht zur Drehachse der Welle oder Achse (1) definierte Außenkontur (4) der Welle oder Achse (1) und die im Querschnitt senkrecht zur Längsrichtung des zweiten Hülsensegmentes (24) definierte Innenkontur (14) des zweiten Hülsensegmentes (24) einen zweiten Ringspalt (26) bilden,
dass das zweite Hülsensegment (24) benachbart zum ersten Hülsensegment (6) angeordnet ist und
dass das Kopplungssystem (20) ebenfalls in den zweiten Ringspalt (26) hineinragt.
